# NEW EUROPEAN PATENT SPECIFICATION

(11) **EP 0 314 059 B2**
(45) Date of publication and mention of the opposition decision: **02.02.1994**
(45) Mention of the grant of the patent: 05.06.1991
(21) Application number: 88117727.3
(22) Date of filing: 25.10.1988
(51) Int. Cl.: B60N 2/00, A47C 5/12, A47C 31/02

(54) **A seat structure particularly for motor vehicles**
Sitzkonstruktion, insbesondere für Kraftfahrzeuge
Structure de siège, en particulier pour véhicules à moteur

(30) Priority: 29.10.1987 IT 5377787 U
(43) Date of publication of application: 03.05.1989
(73) Proprietor: FIAT AUTO S.p.A., 10135 Torino (IT)
(72) Inventor: Cossolo, Antonio, I-10135 Torino (IT)
(74) Representative: Rambelli, Paolo

(56) References cited:
- EP-A- 0 100 698
- EP-A- 0 111 641
- EP-A- 0 138 724
- WO-A-86/03164
- DE-U-83 374 299
- FR-A- 2 463 870

## Description

The present invention relates to a seat structure, for motor vehicles, of the type as defined in the preamble of claim 1.

A seat structure of the above type is known from EP-A-100698. This document shows a seat for motor vehicles, comprising a body, an upholstery and a stuffing the body is made of blow moulded material and both the upholstery and the stuffing are integrally formed with the body.

The object of the present invention is to produce a seat structure which is particularly simple and economical to manufacture.

For this purpose, the subject of the invention is a seat structure as defined in claim 1.

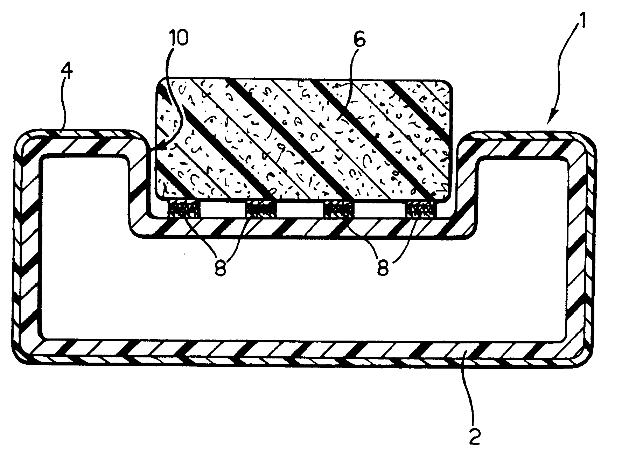

Further characteristics and advantages of the present invention will become clear from the detailed description which follows with references to the appended drawing, in which one embodiment of the invention is shown in frontal section.

A motor-vehicle seat structure, specifically a seat member, is generally indicated 1 in the drawing. It is intended that the term seat structure as used in the present description should include both the seat member and the backrest of a seat.

A support frame constituted by a hollow body of thermoplastics material produced by blow moulding or injection moulding is indicated 2. The frame 2 may conveniently be provided with a surface which is adapted to confer an aesthetic quality, for example a surface 4 which is embossed in the die.

A soft padding element of cellular material is indicated 6. This element is connected to the frame by releasable coupling means 8 whose mutual engagement elements are connected to the padding element and to the frame. The coupling means are preferably constituted by micro-hook connecting means of the Velcro (registered trade mark) type; however, equivalent engagement means may also be used.

The micro-hook connecting devices preferably form integral parts of the frame, being fixed to the frame by co-moulding in situ.

Alternatively, the coupling means may be fixed to the frame 2 by ultrasonic welding or by mechanical connection means.

Preferably as shown in the figure the seat member has a central recess 10 in which the padding element 6 is fitted the coupling means being interposed between the bottom of the recess and the lower face of the padding element.

## Claims

1. A seat structure for motor vehicles, comprising a support frame (2) of plastics material and a padding element (6) connected to the support frame, wherein the support frame (2) is of blow moulded or injection moulded thermoplastics material, characterised in that the part of the frame (2) supporting the seat member has a central recess (10), in which the padding element (6) is fitted, and releasable coupling means (8) consisting of micro-hook devices are associated with said part of the support frame (2) provided with the recess (10) and with the padding element (6) for their interconnection.

2. A seat structure, characterised in that the coupling means are constituted by one or more micro-hook connecting devices.

3. A seat structure according to Claim 1 or Claim 2, characterised in that the coupling means are incorporated in the support frame by co-moulding in situ.

4. A seat structure according to Claim 1 or Claim 2, characterised in that the coupling means are fixed to the support frame by ultrasonic welding.

5. A seat structure according to Claim 1 or Claim 2, characterised in that the coupling means are fixed to the frame by mechanical connection means.

## Patentansprüche

1. Eine Sitzkonstruktion für Kraftfahrzeuge mit einem Tragrahmen (2) aus Kunststoff und mit einem mit dem Tragrahmen verbundenen Polsterelement (6), wobei der Tragrahmen (2) aus blasgeformtem oder spritzgußgeformtem thermoplastischem Material besteht, dadurch gekennzeichnet, daß derjenige Teil des Tragrahmens (2), welcher das Sitzteil stützt, eine zentrale Vertiefung (10) aufweist, in welche das Polsterelement (6) eingesetzt ist und daß lösbare Kupplungsmittel (8), bestehend aus Klettverbindungsvorrichtungen, diesem Teil des Tragrahmens (2), welcher mit der Vertiefung (10) versehen ist, und dem Polsterelement (6) zum Zwecke von deren gegenseitiger Verbindung zugeordnet sind.

2. Sitzkonstruktion, dadurch gekennzeichnet, daß die Kupplungsmittel aus einer oder mehreren Klett-Verbindungsvorrichtungen bestehen.

3. Sitzkonstruktion nach Anspruch 1 oder 2, dadurch gekennzeichnet, daß die Kupplungsmittel durch gemeinsames Ausformen mit dem Rahmen an Ort und Stelle in diesem eingearbeitet sind.

4. Sitzkonstruktion nach Anspruch 1 oder 2, dadurch gekennzeichnet, daß die Kupplungsmittel durch Ultraschallschweißen an dem Rahmen befestigt sind.

5. Sitzkonstruktion nach Anspruch 1 oder 2, dadurch gekennzeichnet, daß die Kupplungsmittel durch mechanische Konstruktionselements an dem Rahmen befestigt sind.

## Revendications

1. Structure de siège pour véhicules automobiles, comprenant une armature support (2) en matière plastique et un élément de rembourrage (6) assemblé à l'armature support, dans laquelle l'armature support (2) est faite de matière thermoplastique moulée par soufflage ou moulée par injection, caractérisée en ce que la partie de l'armature (2) supportant l'assise de siège présente un renfoncement central (10) dans lequel s'ajuste l'élément de rembourrage (6) et des moyens de liaison détachables (8) constitués par des micro-crochets sont associés avec la dite partie de l'armature (2) ayant le dit renforcement (10) et avec l'élément de rembourrage (6) pour les assembler.

2. Structure de siège, caractérisée en ce que les moyens de liaison sont constitués par un ou plusieurs dispositifs d'assemblage à micro-crochets.

3. Structure de siège selon la revendication 1 ou la revendication 2, caractérisée en ce que les moyens de liaison sont incorporés dans l'armature support par moulage en place.

4. Structure de siège selon la revendication 1 ou la revendication 2, caractérisée en ce que les moyens de liaison sont fixés à l'armature support par soudage aux ultrasons.

5. Structure de siège selon la revendication 1 ou la revendication 2, caractérisée en ce que les moyens de liaison sont fixés à l'armature par des moyens d'assemblage mécaniques.
